# EUROPEAN PATENT SPECIFICATION

(11) **EP 3 991 042 B1**
(45) Date of publication and mention of the grant of the patent: **24.06.2026**
(21) Application number: 20729307.7
(22) Date of filing: 04.05.2020
(51) Int. Cl.: G06F 9/50

(54) **DYNAMIC ALLOCATION OF COMPUTING RESOURCES**
DYNAMISCHE ZUWEISUNG VON RECHENRESSOURCEN
ATTRIBUTION DYNAMIQUE DE RESSOURCES INFORMATIQUES

(30) Priority: 28.06.2019 CN 201910578411
(43) Date of publication of application: 04.05.2022
(73) Proprietor: Microsoft Technology Licensing, LLC, Redmond, WA 98052-6399 (US)
(72) Inventor: ZHANG, Quanlu, Redmond, WA 98052-6399 (US); YANG, Fan, Redmond, WA 98052-6399 (US); ZHOU, Lidong, Redmond, WA 98052-6399 (US); YANG, Mao, Redmond, WA 98052-6399 (US); ZHAO, Hanyu, Redmond, WA 98052-6399 (US); HAN, Zhenhua, Redmond, WA 98052-6399 (US)
(74) Representative: Grünecker Patent- und Rechtsanwälte PartG mbB
(86) International application number: PCT/US2020/031250
(87) International publication number: WO 2020/263414

(56) References cited:
- EP-A1- 1 075 769
- WO-A1-2014/173263

## Description

### BACKGROUND

With the development of computer technologies, especially distributed computation technology, cloud computing has become a popular computing model in recent years. Cloud computing is a model that accesses to a configurable set of computing resources (including web servers, storage, graphics processing units, etc.) in a convenient and on-demand manner over a network. The administrator of the set of computing resources can quickly configure, provide, or release resources with a small management overhead. The focus of cloud computing is the management of the computing resources. The dynamic allocation of resources for cloud computing has become a focus of research. An example of current techniques for allocating computing resources can be found in EP 1 075 769 A1, which describes a system for managing and allocating pooled available computing resources in a hierarchical structure.

### SUMMARY

The invention is defined by the independent claims. Particular embodiments are defined by the subject-matter of the dependent claims. Embodiments which do not fall within the scope of the claims are to be interpreted merely as examples useful for understanding the invention. The exemplary embodiments described in the following merely serve to illustrate certain technical aspects for a better understanding of the claimed subject-matter. According to an implementation of the subject matter, a solution for dynamic management of computing resources is provided. In the solution, a first request for using a target number of computing resources in a set of computing resources is received, at least one free computing resource of the set of computing resources being organized into at least one free resource group. When it is determined that a free matching resource group is absent from in the first resource group and a free redundant resource group is present in at least one free resource group, the target number of computing resources are allocated for the first request by splitting the free redundant resource group, wherein the number of resources in the free redundant resource group is greater than the target number. Therefore, the dynamic allocation of computing resources is enabled.

This Summary is provided to introduce a selection of concepts in a simplified form that are further described below in the Detailed Description.

### BRIEF DESCRIPTION OF THE DRAWINGS

Fig. 1 illustrates a block diagram of a computing environment in which a plurality of implementations of the subject matter may be implemented;
Fig. 2 illustrates a flowchart a process of dynamic allocation of computing resources in accordance with some implementations of the subject matter;
Fig. 3 illustrates an example topology of a set of computing resources in accordance with some implementations of the subject matter;
Fig.4 illustrates a flowchart of a process of allocation with available computing resources in accordance with some implementations of the subject matter;
Fig. 5 illustrates a flowchart of a process of dynamic allocation of computing resources in accordance with other implementations of the subject matter;
Fig. 6 illustrates a block diagram of an example computing device in accordance with some implementations of the subject matter.

In the drawings, the same or similar reference numerals refer to the same or similar elements.

### DETAILED DESCRIPTION

The subject matter described herein will now be discussed with reference to several example implementations.

As used herein, the term "comprises" and its variants are to be read as open terms that mean "comprises, but is not limited to." The term "based on" is to be read as "based at least in part on." The terms "one implementation" and "an implementation" are to be read as "at least one implementation." The term "another implementation" is to be read as "at least one other implementation." The terms "first," "second," and the like may refer to different or same objects. Other definitions, either explicit or implicit, may be included below.

As discussed above, a core issue for cloud computing is the management of the computing resources. Some traditional solutions allocate computing resources to multiple tenants who share a set of computing resources through credit management. For example, in a scenario wherein multiple tenants share a multi-graphics processing unit (GPU) cluster in cloud computing, a tenant can be assigned a certain number of tokens as its credit, and the tenant can obtain a GPU to process the submitted jobs by consuming a token. However, in the process of allocating computing resources, the conventional solution only considers whether there is remaining credit for the tenant who applies for the resource, without taking the locations of the allocated computing resources into account. Accordingly, allocations for a huge amount of resource requests with small size (e.g., a single GPU) results in a fragmented allocation of the computing resources. It is therefore difficult to serve tenants who may need a large amount of continuous computing resources.

According to an implementation of the subject matter, a solution for dynamic management of computing resources is provided. In the solution, a first request for using a target number of computing resource in a set of computing resources is received, wherein at least one free computing resource of the set of computing resources is organized into at least one free resource group. When it is determined that a free matching resource group is absent from the first resource group and a free redundant resource group is present in at least one free resource group, the target number of computing resources are allocated for the first request by splitting the free redundant resource group, wherein the number of resources in the free redundant resource group is greater than the target number. Therefore, the dynamic allocation of computing resources is enabled.

Basic principles and several implementations of the subject matter are described below with reference to the drawings.

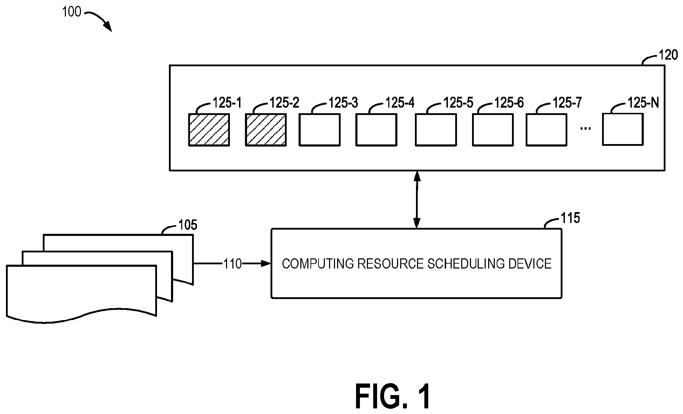

Fig. 1 is a diagram illustrating computing environment 100 in which a plurality of implementations of the subject matter may be implemented. It should be understood that the computing environment 100 illustrated in Fig. 1 is merely exemplary and should not be construed as limiting the functionality and scope of the implementations described herein. As shown in Fig. 1, the computing environment 100 includes a computing resource scheduling device 115 and a set of computing resources 120, which may include a plurality of computing resources 125-1to 125-N (individually or collectively referred to as computing resource 125). In some implementations, computing resource 125 can include a graphics processing unit GPU.

In some implementations, a computing resource scheduling device 115 can be implemented as a variety of user terminals or server terminals. The server terminal can be a server, a large scale computing device provided by various service providers, and the like. The user terminal can be, for example, any type of mobile terminal, a fixed terminal or a portable terminal, including a mobile phone, a multimedia computer, a multimedia tablet, an internet node, a communicator, a desktop computer, a laptop computer, a netbook computer, a tablet computer, a personal Communication system (PCS) device, a personal navigation device, a personal digital assistant (PDA), audio/video player, a digital camera/camcorder, a pointing device, a television receiver, a radio broadcast receiver, an e-book device, a gaming terminal or any combination thereof, including accessories and peripherals for these devices, or any combination thereof.

The computing resource scheduling device 115 can be used to schedule computing resource 125 in a set of computing resources 120. The computing resource scheduling device 115 receives from one or more applications or tenants 105 a request 110 for using a target number of computing resources. The computing resource scheduling device 115 can allocate a target number of computing resources for the request 110 from the set of computing resources 125 based on a computing resource dynamic scheduling process as described in detail below. For example, computing resource scheduling device 115 can allocate computing resource 125-1 and computing resource 125-2 for the request 110.

An example implementation of dynamic allocation of computing resources by the computing resource scheduling device 115 is discussed in detail below.

### Example Process

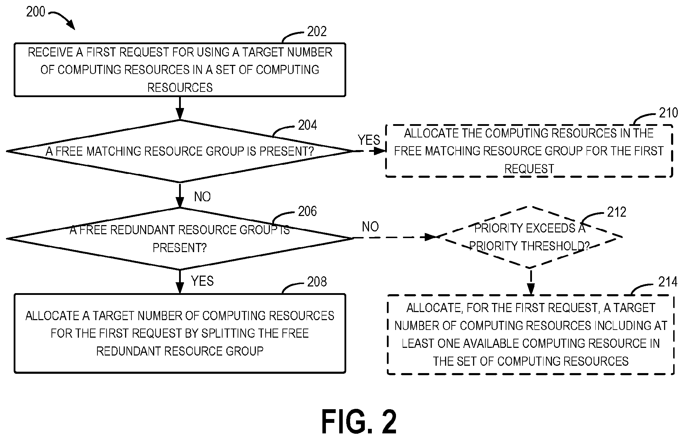

Fig. 2 illustrates a flowchart of a process 200 of dynamic allocation of computing resources in accordance with some implementations of the subject matter. Process 200 can be implemented by computing resource scheduling device 115.

At 202, the computing resource scheduling device 115 receives a first request 110 for using a target number of computing resources in the set of computing resources 120, wherein at least one free computing resource of the set of computing resources 120 is organized into at least one free resource group. In some implementations, the computing resource scheduling device 115 can receive the request 110 from the application or tenant 105 who applies for computing resources in the set of computing resources 120. For example, the tenant 105 can issue a request to the computing resource scheduling device 115 for using 2 GPU devices to deploy machine learning algorithms.

In some implementations, the computing resource scheduling device 115 organizes free computing resources in a set of computing resources 120 into one or more free resource groups based on predetermined rules. For example, based on analysis of the historical requests, it can be determined that most of the tenants request 2 computing resources, and the computing resource scheduling device 115 may preferentially organize the free computing resources into a form of a free resource group including two continuous computing resources.

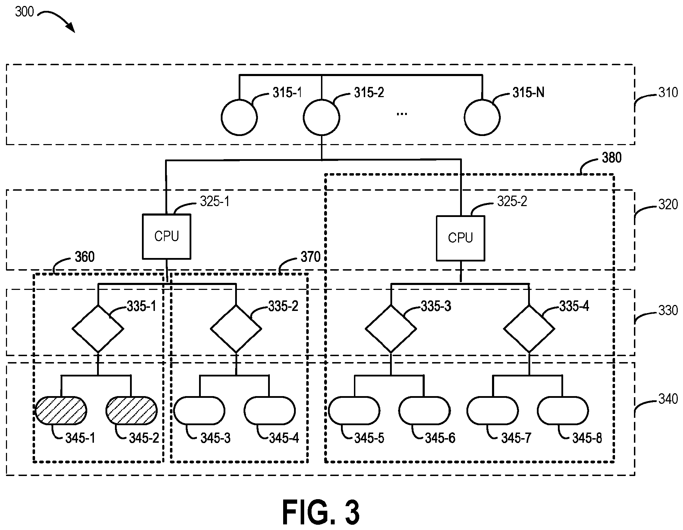

Considering that applications to be deployed on computing resources pay more and more attention to proximity of the computing devices, for example, two GPUs on the same PCIe switch will achieve a better performance than those located in two different computing nodes. In some implementations, the computing scheduling resource device 115 can determine a multi-level topology corresponding to the set of computing resources 110 and organize the free resource groups based on the multi-level topology. The process of organizing free resource groups will now be described with reference to Fig. 3, and the GPU is taken as an example of computing resource. Fig. 3 is a diagram illustrating an example topology 300 of a set of computing resources in accordance with some implementations of the subject matter.

For the example topology 300 as shown in Fig. 3, the multiple GPUs are organized as follows: they are organized into multiple compute nodes, and each compute node includes 2 central processing unit (CPU) slots, each CPU socket is further connected to 2 buses and the interface standard (PCIe) switch, and each PCIe switch is connected to two GPUs. As shown in Fig. 3, the topology 300 includes a plurality of nodes associated with a plurality of different levels.

Specifically, the topology 300 can include a first level 340 including a plurality of GPU nodes 345-1 to 345-8 (individually or collectively referred to as GPU node 345) corresponding to individual GPUs. For example, GPU nodes 345-1 to 345-8 correspond to computing resources 125-1 to 125-N of Fig. 1 respectively (where N = 8). The topology 300 also includes a second level 330 including nodes 335-1 to 335-4 (individually or collectively referred to as PCIe node 335) corresponding to PCIe switches which connect multiple GPUs.

The topology 300 further includes a third level 320 including nodes 325-1 to 325-2 (individually or collectively referred to as CPU node 325) corresponding to the CPU socket which connect multiple PCIe switches. Further, the topology 300 also includes a fourth level 310 including nodes 315-1 to 315-N (individually or collectively referred to as computing device node 315) corresponding to computing devices which connect multiple CPU sockets.

The specific node arrangement and specific number of levels in the topology 300 shown in Fig. 3 are merely exemplary and are not intended to limit the solution of the subject matter. It should be understood that there may be additional levels or fewer levels, which will depend on the actual topology. For example, when one CPU socket is connected to one PCIe switch, the second level 330 can be omitted. In some implementations, the multi-level topology can include at least two of the first level 340, the second level 330, the third level 320, and the fourth level 310.

In some implementations, the computing resource scheduling device 115 can organize, based on the multi-level topology corresponding to the set of computing resources 110, the at least one free computing resource into at least one free resource group, such that each free resource group includes computing resources associated with the same node in the multi-level topology, wherein a node in the multi-level topology correspond to a computing resource in the set of computing resources or a connection component for multiple computing resources in the set of computing resources.

In some implementations, the computing resource scheduling device 115 can organize the free computing resources, such that the free computing resources are associated with nodes of the highest level. For example, continuing with the example of Fig. 3, based on the multi-level topology 300, in a case where the computing resources 125-1 to 125-N are free, the computing scheduling resource device 115 can organize the free computing resources 125 into the same free resource group. In this group, all of the free computing resources 125 are associated with the computing device node 315-2 in the fourth level of multi-level topology 300.

As another example, computing resources 125-1 and 125-2 corresponding to nodes 345-1 and 345-2 are used. Based on the multi-level topology 300, the computing resource scheduling device 115 can determine that the computing resources 125-3 and 125-4 corresponding to the nodes 345-3 and 345-4 will be organized into a free resource group 370. Each of the computing resources in the free resource group 370 correspond to the PCIe node 335-2. Similarly, the computing resource scheduling device 115 can organize computing resources 125-5 to 125-N (N=8) corresponding to nodes 345-5 to 345-8 into one free resource group 380. Each of the computing resources in the free resource group 380 is associated with the CPU node 380. As shown in Fig. 3, since the computing resources 125-1 and 125-2 corresponding to nodes 345-1 and 345-2 are used, the computing resources 125-1 and 125-2 will not be organized into a same free resource group along with computing resources 125-5 to 125-8. Based on such a free resource organization manner, the computing resource scheduling device 115 can ensure the proximity for the allocated computing resources, thereby improving the efficiency of computing resources during runtime.

With continued reference to Fig. 2, at 204, the computing resource scheduling device 115 determines whether a free matching resource group with a target number of computing resources is present in at least one of the free resource groups. In some implementations, computing resource scheduling device 115 can maintain a list of a free resource groups. Continuing with the example of Fig. 3, when all of the eight computing resources 125 are free, the computing resource scheduling device 115 can determine that there is only one free resource group with eight computing resources. In response to determining at 204 that the at least one free resource group includes a free matching resource group, the method 200 proceeds to 210, where the computing resource scheduling device 115 allocates the computing resources in the free matching resource group for the first request 110.

In response to determining at 204 that the free matching resource group is absent from at least one free resource group, method 200 proceeds to 206, where computing resource scheduling device 115 determines whether at least one free resource group includes a free redundant resource group, wherein the number of resources in the free redundant resource group is greater than the target number. Continuing with the example of Fig. 3, for example, when the first request 110 requests to use 2 computing resources, the computing resource scheduling device 115 may determine that there is no free matching resource group corresponding to the target number "2".

The computing resource scheduling device 115 further determines whether there is a free redundant resource group. In some implementations, the computing resource scheduling device 115 can search for a free redundant resource group in a higher level in an increasing order. For example, when the computing resource scheduling device 115 determines that there is no free resource group with a size of 2, it may further determine whether there is a free resource group (a resource group with a size of 4) corresponding to the third level 320, and if not, then further determine whether there is a free resource group (a resource group with a size of 8) corresponding to the fourth level 310.

In response to determining at 206 that the at least one free resource group includes a free redundant resource group, the method 200 proceeds to 208, where the computing resource scheduling device 115 allocates a target number of computing resources for the first request by splitting the free redundant resource group. The computing resource scheduling device 115 splits the free redundant resource group into a first resource group and at least one second resource group, wherein the first resource group has a target number of computing resources. The computing resources scheduling device 114 then allocates the computing resources in the first resource group for the first request. For example, continuing with the example of Fig. 3, when the eight computing resources 125 are all free, and the number of computing resources requested by the first request 110 is 2, the computing resource scheduling device 115 may split the free redundant resource group into the first resource group 360 (including the computing resources 125-1 and 125-2), a free resource group 370 (including the computing resources 125-3 and 125-4), and a free resource group 380 (including the computing resources 125-5 to 125-8). The computing resource scheduling device 115 may further allocate the computing resources 125-1 and 125-2 in the first resource 360 for the first request 110.

In some implementations, the computing resource scheduling device 115 can split free redundant resource groups according to the topology. For example, the computing resource scheduling device 115 may split the free redundant resource group, which corresponds to the node 315-2 in the fourth level 310, into two nodes 325-1 and 325-2 in the third level 320. The free resource group corresponding to the node 325-1 is further split to two free resource groups corresponding to the nodes 335-1 and 335-2 in the fourth level 330. Based on such a manner, the computing resource scheduling device 115 can further ensure that a larger continuous computing resource group is retained as much as possible, while ensuring the proximity of the allocated resources. Therefore, the computing resources can meet the requirements of usage requests with different sizes.

In some implementations, in response to completion of the first request 110, the computing resource scheduling device 115 can mark the first resource group as free. The computing resource scheduling device 115 may further determine that all of the computing resources in the at least one second resource group are free, and then merge the first resource group and the at least one second resource group into a new free resource group. For example, continuing with the example of Fig. 3, when determining that the computing resources 125-1 and 125-2 corresponding to nodes 345-1 and 345-2 are marked as free, the computing resource scheduling device 115 may first determine whether the remaining computing resources 125-3 and 125-4 corresponding to the node 325-1 in the higher layer are free, and if so, the four computing resources 125-1 to 125-2 may be merged into a new free resource group. Further, the computing resource scheduling device 115 can also determine whether the remaining computing resources 125-5 to 125-N (N=8) corresponding to the node 315-2 above node 325-1 are free, and if so, the resource scheduling device 115 may further merge the computing resources 125-1 to 125-N (N=8) into a new free resource group for processing subsequent requests. In this manner, computing resource scheduling device 115 can always reserve a larger set of continuous computing resource groups, thereby enabling computing resources to meet the requirements of usage requests with different sizes.

In response to determining at 206 that a free redundant resource group is absent from the at least one free resource group, the method 200 proceeds to 212, where the computing resource scheduling device 115 determines whether the priority of first request 110 exceeds a priority threshold. In some implementations, the application and/or tenant 105 can append information indicating the priority when initiating the first request 110. For example, the application and/or tenant 105 can specify a particular priority based on the type of tasks to be deployed. For example, a task with a higher importance can be assigned with a higher priority.

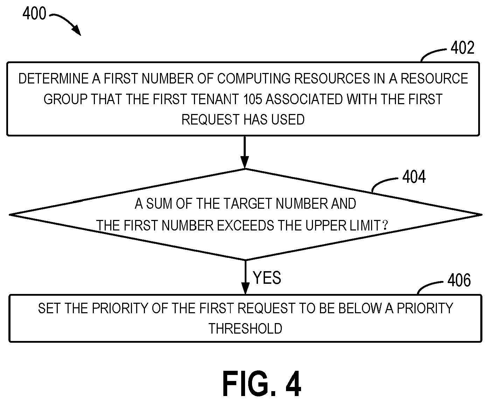

In some implementations, the computing resource scheduling device 115 can also implement priority control of the received requests. Fig. 4 shows a flowchart of a process for priority control in accordance with further implementations of the subject matter. As shown in Fig. 4, at block 402, the computing resource scheduling device 115 can determine a first number of computing resources in a resource group that the first tenant 105 associated with the first request has used. At block 404, the computing resource scheduling device 115 may determine whether a sum of the target number and the first number exceeds the upper limit of the number of computing resources corresponding to the first tenant 105. In some implementations, the upper limit of the number of computing resources corresponding to the first tenant is equal to a sum of a second number of computing resources pre-allocated for the first tenant and a third number of computing resources obtained by the tenant through exchanging with a second tenant.

For example, based on the service purchased by the tenant 105, the computing resource scheduling device 115 may set a second number (also referred to as a tenant credit) of pre-allocated resources, for example 4, for the first tenant who submits the first request 110. In some implementations, the computing resource scheduling device 115 can support dynamic adjustment of a second number of the pre-allocated resources of the tenant 105. For example, the tenant 105 may apply to the computing resource scheduling device 115 to reduce the tenant credit in a first time period, and to increase the tenant credit in a second time period. In this manner, for example, the tenant 105 can hand over the computing resources that are usually free in exchange for more computing resources in a certain period when more jobs need to be processed.

In some implementations, each tenant can be pre-allocated with a virtual private set of computing resources, and resources in the virtual private set of computing resources can always be occupied by the tenant who has a higher priority. In some implementations, the virtual private set of computing resources can correspond to a node in a layer in the multi-level topology described above, such that the computing resources allocated to the tenant are always contiguous.

In some implementations, the computing resource scheduling device 115 can also support resource exchanges between the tenants. For example, the computing resource scheduling device 115 can configure predetermined rules for resource exchanges and collect resource exchange requests submitted by the tenants. The computing resource scheduling device can determine whether the submitted resource exchange request conforms to a predetermined rule for performing resource exchange. In some implementations, the predetermined rules may comprise exchanging computing resources based on points of different tenants. For example, different tenants can gain corresponding points by providing computing resources. For example, a tenant A can apply for exchanging one computing resource with 2 points, a tenant B can apply for exchanging one computing resource with 3 points, and a tenant C can apply for providing computing resources. In this case, according to the predetermined rule, the computing resource scheduling device 115 may determine that the tenant B can obtain the computing resources provided by the tenant C at the cost of 3 points, and the tenant C can gain the corresponding points. Based on such a manner, the computing resource scheduling device 115 can support the exchange of resources owned by different tenants, thereby further improving the usage efficiency of the computing resources. For example, the first tenant 105 can obtain two additional available computing resources through resource exchange.

In response to determining at block 404 that the sum exceeds an upper limit of the number of computing resources, the method proceeds to block 406, where the computing resource scheduling device 115 may set the priority of the first request to be below a priority threshold. Based on such a manner, the computing resource scheduling device 115 can enable the tenant 105 to occupy at a lower priority some of the computing resources of other tenants which are temporarily free, thereby increasing the usage ratio of the computing resources.

Alternatively, in response to determining at block 404 that the sum exceeds the upper limit of the number of computing resources, the computing resource scheduling device 115 may suspend the first request until that the sum is less than or equal to the upper limit of the number of computing resources.

Alternatively, in response to determining at block 404 that the sum exceeds an upper limit of the number of computing resources, the computing resource scheduling device 115 may also alert the tenant 105 whether to allocate resources with low priority and remind the tenant 105 that the resources allocated with low priority may be reclaimed at any time. The computing resource scheduling device 115 may set the priority of the first request 110 to be lower than a threshold if the tenant 105 determines to allocate resources with a low priority.

With continued reference to Fig. 2, in response to determining at 212 that the priority is above the priority threshold, the method 200 proceeds to 214, where the computing resource scheduling device 115 allocates, for the first request, a target number of computing resources including at least one available computing resource in the set of computing resources. The available computing resources can comprise both a free computing resource and a candidate computing resource, and the candidate computing resource is a resource which has been allocated to a second request with a priority lower than or equal to a priority threshold. For example, when it is determined in the process through block 202 to block 206 that the tenant has no free computing resources and the priority of the first request 110 submitted by the tenant is above the priority threshold, some requests with a lower priority may have occupied the resources in the virtual private resource set that has been allocated to the tenant.

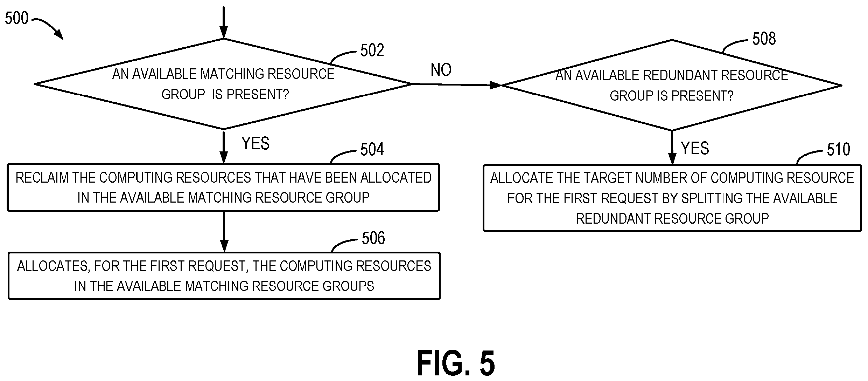

In some implementations, the computing resource scheduling device 115 allows a request with a priority exceeding a priority threshold to occupy computing resources that have been allocated to requests with a priority lower than or equal to the priority threshold, which are also referred to as candidate computing resources. The computing resource scheduling device 115 may also organize the available computing resources into at least one available computing resource group in the same manner as organizing the free resource groups. The process of block 214 will be described in detail below with reference to Fig. 5, which shows a flowchart of a process 500 for allocation with available computing resources in accordance with some implementations of the subject matter.

As shown in Fig. 5, at block 502, the computing resource scheduling device 115 determines whether an available matching resource group with a target number of computing resources is present in at least one of the available resource groups. Continuing with the example of Fig. 3, for example, the computing resources 125-1 and 125-2 corresponding to the nodes 345-1 and 345-2 are assigned to a second request which is below a priority threshold, the available resources in the case include the computing resources 125-1 to 125-N (N=8), although the resources 125-1 and 125-2 are not free. Thus, in accordance with the manner described above, the computing resource scheduling device 115 can organize the available computing resources 125-1 to 125-8 into one available computing resource group.

In response to determining at block 502 that an available matching resource group is present in at least one of the available resource groups, the method proceeds to block 504, wherein the computing resource scheduling device 115 can reclaim the computing resources that have been allocated in the available matching resource group. For example, when the first request 110 requires using eight computing resources, the computing resource scheduling device 115 can directly terminate the jobs performed on the computing resources 125-1 and 125-2 and reclaim the computing resources 125-1 and 125-2 that have been allocated to the second request. At block 506, the computing resource scheduling device 115 allocates, for the first request 110, the computing resources in the available matching resource groups. For example, the computing resource scheduling device 115 can allocate the available computing resources 125-1 to 125-N (N=8) for the first request 110.

Based on such a manner, the computing resource scheduling device 115 can also ensure that other tenants can always obtain computing resources within their corresponding credits while supporting some requests to temporarily occupy computing resources previously allocated to other tenants.

In response to determining at block 502 that an available matching resource group is absent from the at least one available resource group, the method proceeds to block 508, where the computing resource scheduling device 115 can determine whether the at least one available resource group includes an available redundant resource group, wherein the number of resources in the available redundant resource group is greater than the target number.

In response to determining at block 508 that an available redundant resource group is present in the at least one available resource group, the method proceeds to block 510, where the computing resource scheduling device 115 allocates the target number of computing resources for the first request by splitting the available redundant resource group. It should be understood that the processes of blocks 508 and 510 are similar to the processes described above for blocks 206 and 208, and the computing resource scheduling device 115 may obtain a target number of computing resources by splitting a larger consecutive available computing resource group.

Based on the above manner, the computing resource scheduling device 115 can perform different personalized allocation logic for different priority requests. Given the premise of preferentially allocating free computing resources, the high priority request can further use the computing resources occupied by requests with a low priority, thereby increasing the flexibility of computing resource allocation.

### Example Environment

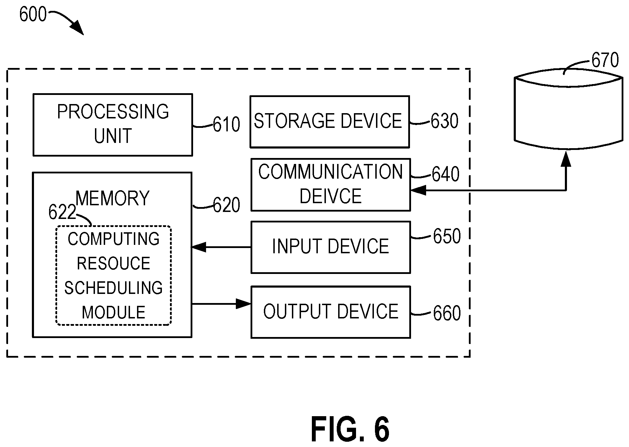

Fig. 6 is a block diagram illustrating a device 600 which is capable of implementing embodiments of the subject matter. The device 600 can be used to implement computing resource scheduling device 115 of Fig.1. It should be understood that the device 600 illustrated in Fig. 6 is merely exemplary and should not be construed as limitation to the functionality and scope of the implementations described herein. As shown in Fig. 1, components of the device 600 may include, but are not limited to, one or more processors or processing units 110, a memory 120, a storage device 130, one or more communication units 140, one or more input devices 150, and one or multiple output devices 160.

In some implementations, the device 600 can be implemented as a variety of user terminals or serving terminals. A serving terminal may be a server provided by a respective service provider, large-scale computing device, or the like. The user terminal may be any type of mobile terminal, fixed terminal or portable terminal, such as mobile telephone, station, unit, device, multimedia computer, multimedia tablet, Internet node, communicator, desk-top computer, laptop computer, notebook computer, netbook computer, tablet computer, personal communication system (PCS) device, personal navigation device, personal digital assistant (PDA), audio/video player, digital camera/video camera, positioning device, TV receiver, radio broadcast receiver, E-book device, gaming device or any combinations thereof, including accessories and peripherals of these devices or any combinations thereof. It would be appreciated that the computing device 100 can support any type of interface for a user (such as a "wearable" circuit.)

Processing unit 610 may be a physical or virtual processor and can implement various processes based on programs stored in the memory 620. In a multi-processor system, a plurality of processing units execute computer executable instructions in parallel so as to improve parallel processing capability of the computing device 600. The processing unit 610 may also be referred to as a central processing unit (CPU), a microprocessor, a controller, or a microcontroller.

The device 600 generally comprises various computer storage medium. The computer storage medium can be any medium accessible by the device 600, including but not limited to volatile and non-volatile medium, and removable and non-removable medium. The memory 620 can be a volatile memory (for example, a register, cache, Random Access Memory (RAM)), non-volatile memory (for example, a Read-Only Memory (ROM), Electrically Erasable Programmable Read-Only Memory (EEPROM), flash memory), or any combination thereof. The memory 620 may include one or more program modules, for example computing resource scheduling module 622, and these program modules are configured to perform functions of various implementations described herein. The computing resource scheduling module 622 may be accessed and run by the processing unit 610 to implement corresponding functions. The storage device 630 can be any removable and non-removable medium and may include machine-readable medium, which can be used for storing information and/or data and can be accessed in the device 600.

Functions of the components of the device 600 may be implemented in a single computing cluster or multiple computers, and these computers can communicate through communicative connection. Therefore, the device 600 can operate in a networking environment using a logical connection with one or more other servers, personal computers (PCs) or further general network nodes. By means of the communication unit 640, the device 600 can further communicate with one or more external devices (not shown) if required, the external device being for example a database 670, other storage devices, a server and a display device, with one or more devices enabling the user to interact with the device 600, or any devices (such as a network card, a modem and the like) enabling the device 600 to communicate with one or more other computing devices. Such communication can be performed via input/output (I/O) interfaces (not shown).

The input device 650 may include one or more of a variety of input devices, such as a mouse, a keyboard, a tracking ball, a voice-input device, and the like. The output device 660 may include one or more of a variety of output devices, such as a display, a loudspeaker, a printer, and the like.

The device 600 includes a computing resource scheduling module 622 configured to: receiving a first request for using a target number of computing resources in a set of computing resources, at least one free computing resource of the set of computing resources being organized into at least one free resource group; determine whether a free matching resource group with the target number of computing resources is present in the at least one free resource group; in response to the free matching resource group being absent from the at least one free resource group, determining whether a free redundant resource group is included in the at least one free resource group, a number of resources included in the free redundant resource group being greater than the target number; and in response to the free redundant resource group being present in the at least one free resource group, allocate the target number of computing resources for the first request by splitting the free redundant resource group.

### EMBODIMENTS IMPLEMENTATIONS

Some example implementations of the subject matter are listed below.

In accordance with a first aspect, there is provided a method of managing computing resources. The method comprises: receiving a first request for using a target number of computing resources in a set of computing resources, at least one free computing resource of the set of computing resources being organized into at least one free resource group; determining whether a free matching resource group with the target number of computing resources is present in the at least one free resource group; in response to the free matching resource group being absent from the at least one free resource group, determining whether a free redundant resource group is present in the at least one free resource group, a number of resources in the free redundant resource group being greater than the target number; and in response to the free redundant resource group being present in the at least one free resource group, allocating the target number of computing resources for the first request by splitting the free redundant resource group.

In some implementations, the method further comprises: organizing the at least one free computing resource into the at least one free resource group based on a multi-level topology corresponding to the set of computing resources, such that each free resource group includes computing resources associated with a same node in the multi-level topology, a node in the multi-level topology corresponding to one of the set of computing resources or a connection component for multiple computing resources in the set of computing resources.

In some implementations, the computing resource comprises a graphics processing unit, and the multi-level topology comprises at least two of: a first level, comprising a node corresponding to an individual graphics processing unit; a second level, comprising a node corresponding to a PCIe switch for connecting a plurality of graphics processing units; a third level, comprising a node corresponding to a CPU socket for connecting a plurality of PCIe switches; and a fourth level, comprising a node corresponding to a computing device for connecting a plurality of CPU sockets.

In some implementations, allocating the target number of computing resources for the first request by splitting the free redundant resource group comprises: splitting the free redundant resource group into a first resource group and at least one second resource group, the first resource group including the target number of computing resources; and allocating computing resources from the first resource group for the first request.

In some implementations, the method further comprises: in response to completion of the first request, marking the first resource group as free; and in response to determining that all of computing resources in the at least one second resource group are free, merging the first resource group and the at least one second resource group into a new free resource group.

The method further comprises: in response to determining that the free redundant resource group is absent from the at least one free resource group, determining whether a priority of the first request exceeds a priority threshold; and in response to the priority exceeding the priority threshold, allocating, for the first request, the target number of computing resources including at least one available computing resource from the set of computing resources, the available computing resources including a free computing resource and a candidate computing resource allocated to a second request with a priority lower than or equal to the priority threshold.

In some implementations, the at least one available computing resource is organized into at least one available resource group, and wherein allocating for the first request the target number of computing resources including at least one available computing resource from the set of computing resources comprises: determining whether an available matching resource group with the target number of computing resources is present in the at least one available resource group; in response to the available matching resource group being present in the at least one available resource group, reclaiming a computing resource that has been allocated in the available matching resource group; and allocating computing resources from the available matching resource group for the first request.

In some implementations, allocating for the first request the target number of computing resources including at least one available computing resource from the set of computing resources comprises: in response to the available matching resource group being absent from the at least one available resource group, determining whether an available redundant resource group is present in the at least one available resource group, a number of resources in the available redundant resource group being greater than the target number; and in response to determining that the available redundant resource group is present in the at least one available resource group, allocating the target number of computing resources for the first request by splitting the available redundant resource group.

In some implementations, the method comprises: determining a first number of computing resources in a resource group that a first tenant associated with the first request has used; and in response to determining that a sum of the target number and the first number exceeds an upper limit of a number of computing resources corresponding to the first tenant, setting a priority of the first request to be lower than a priority threshold.

In some implementations, the upper limit of the number of computing resources corresponding to the first tenant is equal to a sum of a second number of computing resources pre-allocated for the first tenant and a third number of computing resources obtained by exchanging with a second tenant.

In accordance with a second aspect, there is provided a device. The device comprising: a processing unit; and a memory coupled to the processing unit and comprising instructions stored thereon which, when executed by the processing unit, cause the device to perform acts of: receiving a first request for using a target number of computing resources in a set of computing resources, at least one free computing resource of the set of computing resources being organized into at least one free resource group; determining whether a free matching resource group with the target number of computing resources is present in the at least one free resource group; free matching resource group being absent from the at least one free resource group, determining whether a free redundant resource group is present in the at least one free resource group, a number of resources in the free redundant resource group being greater than the target number; and in response to the free redundant resource group being present in the at least one free resource group, allocating the target number of computing resources for the first request by splitting the free redundant resource group.

In some implementations, the acts further comprises: organizing the at least one free computing resource into the at least one free resource group based on a multi-level topology corresponding to the set of computing resources, such that each free resource group includes computing resources associated with a same node in the multi-level topology, a node in the multi-level topology corresponding to one of the set of computing resources or a connection component for multiple computing resources in the set of computing resources.

In some implementations, the computing resource comprises a graphics processing unit, and the multi-level topology comprises at least two of: a first level, comprising a node corresponding to an individual graphics processing unit; a second level, comprising a node corresponding to a PCIe switch for connecting a plurality of graphics processing units; a third level, comprising a node corresponding to a CPU socket for connecting a plurality of PCIe switches; and a fourth level, comprising a node corresponding to a computing device for connecting a plurality of CPU sockets.

In some implementations, allocating the target number of computing resources for the first request by splitting the free redundant resource group comprises: splitting the free redundant resource group into a first resource group and at least one second resource group, the first resource group including the target number of computing resources; and allocating computing resources from the first resource group for the first request.

In some implementations, the acts further comprises: in response to completion of the first request, marking the first resource group as free; and in response to determining that all of computing resources in the at least one second resource group are free, merging the first resource group and the at least one second resource group into a new free resource group.

The acts further comprise: in response to determining that the free redundant resource group is absent from the at least one free resource group, determining whether a priority of the first request exceeds a priority threshold; and in response to the priority exceeding the priority threshold, allocating, for the first request, the target number of computing resources including at least one available computing resource from the set of computing resources, the available computing resources including a free computing resource and a candidate computing resource allocated to a second request with a priority lower than or equal to the priority threshold.

In some implementations, the at least one available computing resource is organized into at least one available resource group, and wherein allocating for the first request the target number of computing resources including at least one available computing resource from the set of computing resources comprises: determining whether an available matching resource group with the target number of computing resources is present in the at least one available resource group; in response to the available matching resource group being present in the at least one available resource group, reclaiming a computing resource that has been allocated in the available matching resource group; and allocating computing resources from the available matching resource group for the first request.

In some implementations, allocating for the first request the target number of computing resources including at least one available computing resource from the set of computing resources comprises: in response to the available matching resource group being absent from the at least one available resource group, determining whether an available redundant resource group is present in the at least one available resource group, a number of resources in the available redundant resource group being greater than the target number; and in response to determining that the available redundant resource group is present in the at least one available resource group, allocating the target number of computing resources for the first request by splitting the available redundant resource group.

In some implementations, the acts further comprises: determining a first number of computing resources in a resource group that a first tenant associated with the first request has used; and in response to determining that a sum of the target number and the first number exceeds an upper limit of a number of computing resources corresponding to the first tenant, setting a priority of the first request to be lower than a priority threshold.

In some implementations, the upper limit of the number of computing resources corresponding to the first tenant is equal to a sum of a second number of computing resources pre-allocated for the first tenant and a third number of computing resources obtained by exchanging with a second tenant.

In accordance with a third aspect, there is provided a computer program product being tangibly stored in a non-transitory computer storage medium and comprising machine executable instructions which, when executed by a device, cause the device to perform any method according to the first aspect.

In accordance with a fourth aspect, there is provided a computer-readable medium stored thereon with machine-executable instructions which, when executed by a device, cause the device to perform the method according to the first aspect.

The functionally described herein can be performed, at least in part, by one or more hardware logic components For example, and without limitation, illustrative types of hardware logic components that can be used include Field-Programmable Gate Arrays (FPGAs), Application-specific Integrated Circuits (ASICs), Application-specific Standard Products (ASSPs), System-on-a-chip systems (SOCs), Complex Programmable Logic Devices (CPLDs), and the like.

Program code for carrying out methods of the subject matter described herein may be written in any combination of one or more programming languages. These program codes may be provided to a processor or controller of a general-purpose computer, special purpose computer, or other programmable data processing apparatus, such that the program codes, when executed by the processor or controller, cause the functions/operations specified in the flowcharts and/or block diagrams to be implemented. The program code may execute entirely on a machine, partly on the machine, as a stand-alone software package, partly on the machine and partly on a remote machine or entirely on the remote machine or server.

In the context of this disclosure, a machine-readable medium may be any tangible medium that may contain or store a program for use by or in connection with an instruction execution system, apparatus, or device. The machine-readable medium may be a machine-readable signal medium or a machine-readable storage medium. A machine-readable medium may include but not limited to an electronic, magnetic, optical, electromagnetic, infrared, or semiconductor system, apparatus, or device, or any suitable combination of the foregoing. More specific examples of the machine-readable storage medium would include an electrical connection having one or more wires, a portable computer diskette, a hard disk, a random-access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing.

Further, while operations are depicted in a particular order, this should not be understood as requiring that such operations be performed in the particular order shown or in sequential order, or that all illustrated operations be performed, to achieve desirable results. In certain circumstances, multitasking and parallel processing may be advantageous. Likewise, while several specific implementation details are contained in the above discussions, these should not be construed as limitations on the scope of the subject matter described herein, but rather as descriptions of features that may be specific to particular implementations. Certain features that are described in the context of separate implementations may also be implemented in combination in a single implementation. Conversely, various features that are described in the context of a single implementation may also be implemented in multiple implementations separately or in any suitable subcombination.

Although the subject matter has been described in language specific to structural features and/or methodological acts, it is to be understood that the subject matter specified in the appended claims is not necessarily limited to the specific features or acts described above. Rather, the specific features and acts described above are disclosed as example forms of implementing the claims.

## Claims

1. A computer-implemented method of managing computing resources, including:
receiving a first request for using a target number of computing resources in a set of computing resources, at least one free computing resource of the set of computing resources being organized into at least one free resource group;
determining whether a free matching resource group with the target number of computing resources is present in the at least one free resource group;
in response to the free matching resource group being absent from the at least one free resource group, determining whether a free redundant resource group is present in the at least one free resource group, a number of resources in the free redundant resource group being greater than the target number; and
in response to the free redundant resource group being present in the at least one free resource group, allocating the target number of computing resources for the first request by splitting the free redundant resource group, said allocating comprising splitting the free redundant resource group into a first resource group and at least one second resource group, the first resource group including the target number of computing resources; and
allocating computing resources from the first resource group for the first request; and
in response to determining that the free redundant resource group is absent from the at least one free resource group, determining whether a priority of the first request exceeds a priority threshold; and
in response to the priority exceeding the priority threshold, allocating, for the first request, the target number of computing resources including at least one available computing resource from the set of computing resources, the available computing resource including a free computing resource and a candidate computing resource allocated to a second request with a priority lower than or equal to the priority threshold.

2. The method of Claim 1, further comprising:
organizing the at least one free computing resource into the at least one free resource group based on a multi-level topology corresponding to the set of computing resources, such that each free resource group includes computing resources associated with a same node in the multi-level topology, a node in the multi-level topology corresponding to one of the set of computing resources or a connection component for multiple computing resources in the set of computing resources.

3. The method of Claim 2, wherein the computing resource comprises a graphics processing unit, and the multi-level topology comprises at least two of:
a first level, comprising a node corresponding to an individual graphics processing unit;
a second level, comprising a node corresponding to a PCIe switch for connecting a plurality of graphics processing units;
a third level, comprising a node corresponding to a CPU socket for connecting a plurality of PCIe switches; and
a fourth level, comprising a node corresponding to a computing device for connecting a plurality of CPU sockets.

4. The method of Claim 1, further comprising:
in response to completion of the first request, marking the first resource group as free; and
in response to determining that all of computing resources in the at least one second resource group are free, merging the first resource group and the at least one second resource group into a new free resource group.

5. The method of Claim 1, wherein the at least one available computing resource is organized into at least one available resource group, and wherein allocating for the first request the target number of computing resources including at least one available computing resource from the set of computing resources:
determining whether an available matching resource group with the target number of computing resources is present in the at least one available resource group;
in response to the available matching resource group being present in the at least one available resource group, reclaiming a computing resource that has been allocated in the available matching resource group; and
allocating computing resources from the available matching resource group for the first request.

6. The method of Claim 5, wherein allocating for the first request the target number of computing resources including at least one available computing resource from the set of computing resources:
in response to the available matching resource group being absent from the at least one available resource group, determining whether an available redundant resource group is present in the at least one available resource group, a number of resources in the available redundant resource group being greater than the target number; and
in response to determining that the available redundant resource group is present in the at least one available resource group, allocating the target number of computing resources for the first request by splitting the available redundant resource group.

7. The method of Claim 1, further comprising:
determining a first number of computing resources in a resource group that a first tenant associated with the first request has used; and
in response to determining that a sum of the target number and the first number exceeds an upper limit of a number of computing resources corresponding to the first tenant, setting a priority of the first request to be lower than a priority threshold.

8. The method of Claim 7, wherein the upper limit of the number of computing resources corresponding to the first tenant is equal to a sum of a second number of computing resources pre-allocated for the first tenant and a third number of computing resources obtained by exchanging with a second tenant.

9. A device, comprising:
a processing unit; and
a memory coupled to the processing unit and comprising instructions stored thereon which, when executed by the processing unit, cause the device to perform acts of:
receiving a first request for using a target number of computing resources in a set of computing resources, at least one free computing resource of the set of computing resources being organized into at least one free resource group;
determining whether a free matching resource group with the target number of computing resources is present in the at least one free resource group;
in response to the free matching resource group being absent from the at least one free resource group, determining whether a free redundant resource group is present in the at least one free resource group, a number of resources in the free redundant resource group being greater than the target number; and
in response to the free redundant resource group being present in the at least one free resource group, allocating the target number of computing resources for the first request by splitting the free redundant resource group, said allocating comprising splitting the free redundant resource group into a first resource group and at least one second resource group, the first resource group including the target number of computing resources; and
allocating computing resources from the first resource group for the first request; and
in response to determining that the free redundant resource group is absent from the at least one free resource group, determining whether a priority of the first request exceeds a priority threshold; and
in response to the priority exceeding the priority threshold, allocating, for the first request, the target number of computing resources including at least one available computing resource from the set of computing resources, the available computing resource including a free computing resource and a candidate computing resource allocated to a second request with a priority lower than or equal to the priority threshold.

10. The device of Claim 9, the acts further comprising:
organizing the at least one free computing resource into the at least one free resource group based on a multi-level topology corresponding to the set of computing resources, such that each free resource group includes computing resources associated with a same node in the multi-level topology, a node in the multi-level topology corresponding to one of the set of computing resources or a connection component for multiple computing resources in the set of computing resources.

11. The device of Claim 10, wherein the computing resource comprises a graphics processing unit, and the multi-level topology comprises at least two of:
a first level, comprising a node corresponding to an individual graphics processing unit;
a second level, comprising a node corresponding to a PCIe switch for connecting a plurality of graphics processing units;
a third level, comprising a node corresponding to a CPU socket for connecting a plurality of PCIe switches; and
a fourth level, comprising a node corresponding to a computing device for connecting a plurality of CPU sockets.

12. A computer program product being tangibly stored in a computer storage medium and comprising machine executable instructions which, when executed by a device, cause the device to:
determine whether a free matching resource group with the target number of computing resources is present in the at least one free resource group;
in response to the free matching resource group being absent from the at least one free resource group, determine whether a free redundant resource group is present in the at least one free resource group, a number of resources in the free redundant resource group being greater than the target number; and
in response to the free redundant resource group being present in the at least one free resource group, allocate the target number of computing resources for the first request by splitting the free redundant resource group, said allocating comprising splitting the free redundant resource group into a first resource group and at least one second resource group, the first resource group including the target number of computing resources; and
allocating computing resources from the first resource group for the first request; and
in response to determining that the free redundant resource group is absent from the at least one free resource group, determining whether a priority of the first request exceeds a priority threshold; and
in response to the priority exceeding the priority threshold, allocating, for the first request, the target number of computing resources including at least one available computing resource from the set of computing resources, the available computing resource including a free computing resource and a candidate computing resource allocated to a second request with a priority lower than or equal to the priority threshold.

## Patentansprüche

1. Computerimplementiertes Verfahren zur Verwaltung von Rechenressourcen, mit:
Empfangen einer ersten Anforderung zur Nutzung einer Zielanzahl von Rechenressourcen aus einer Gruppe von Rechenressourcen, wobei mindestens eine freie Rechenressource der Gruppe von Rechenressourcen in mindestens einer freien Ressourcengruppe organisiert ist;
Bestimmen, ob eine freie, passende Ressourcengruppe mit der Zielanzahl an Rechenressourcen in der mindestens einen freien Ressourcengruppe vorhanden ist;
als Reaktion darauf, dass die freie, passende Ressourcengruppe in der mindestens einen freien Ressourcengruppe fehlt, Bestimmen, ob eine freie, redundante Ressourcengruppe in der mindestens einen freien Ressourcengruppe vorhanden ist, wobei die Anzahl der Ressourcen in der freien, redundanten Ressourcengruppe größer ist als die Zielanzahl; und
als Reaktion darauf, dass die freie redundante Ressourcengruppe in der mindestens einen freien Ressourcengruppe vorhanden ist, Zuweisen der Zielanzahl an Rechenressourcen für die erste Anforderung durch Aufteilen der freien redundanten Ressourcengruppe, wobei das Zuweisen Aufteilen der freien redundanten Ressourcengruppe in eine erste Ressourcengruppe und mindestens eine zweite Ressourcengruppe umfasst, wobei die erste Ressourcengruppe die Zielanzahl an Rechenressourcen enthält; und
Zuweisen von Rechenressourcen aus der ersten Ressourcengruppe für die erste Anforderung; und
als Reaktion auf das Bestimmen, dass die freie redundante Ressourcengruppe in der mindestens einen freien Ressourcengruppe fehlt, Bestimmen, ob eine Priorität der ersten Anforderung einen Prioritätsschwellenwert überschreitet; und
als Reaktion darauf, dass die Priorität den Prioritätsschwellenwert überschreitet, Zuweisen der Zielanzahl an Rechenressourcen für die erste Anforderung, einschließlich mindestens einer verfügbaren Rechenressource aus der Gruppe an Rechenressourcen, wobei die verfügbare Rechenressource eine freie Rechenressource und eine Kandidaten- Rechenressource enthält, die einer zweiten Anforderung mit einer Priorität zugewiesen ist, die kleiner oder gleich dem Prioritätsschwellenwert ist.

2. Verfahren nach Anspruch 1, das ferner umfasst:
Überführen der mindestens einen freien Rechenressource in die mindestens eine freie Ressourcengruppe auf der Grundlage einer der Gruppe der Rechenressourcen entsprechenden mehrstufigen Topologie, derart, dass jede freie Ressourcengruppe Rechenressourcen umfasst, die einem gleichen Knoten in der mehrstufigen Topologie zugeordnet sind, wobei ein Knoten in der mehrstufigen Topologie einer der Gruppe der Rechenressourcen oder einer Verbindungskomponente für mehrere Rechenressourcen in der Gruppe der Rechenressourcen entspricht.

3. Verfahren nach Anspruch 2, wobei die Rechenressource eine Grafikverarbeitungseinheit aufweist und die mehrstufige Topologie mindestens zwei der folgenden enthält:
eine erste Ebene, die einen Knoten umfasst, der einer einzelnen Grafikverarbeitungseinheit entspricht;
eine zweite Ebene, die einen Knoten umfasst, der einem PCle-Switch zum Verbinden einer Vielzahl von Grafikprozessoren entspricht;
eine dritte Ebene, die einen Knoten umfasst, der einem CPU-Sockel zum Verbinden einer Vielzahl von PCle-Switches entspricht; und
eine vierte Ebene, die einen Knoten umfasst, der einem Rechengerät zum Verbinden einer Vielzahl von CPU-Sockeln entspricht.

4. Verfahren nach Anspruch 1, das ferner umfasst:
als Reaktion auf den Abschluss der ersten Anforderung Markieren der ersten Ressourcengruppe als frei; und
als Reaktion auf das Bestimmen, dass alle Rechenressourcen in der mindestens einen zweiten Ressourcengruppe frei sind, Zusammenführen der ersten Ressourcengruppe und der mindestens einen zweiten Ressourcengruppe zu einer neuen freien Ressourcengruppe.

5. Verfahren nach Anspruch 1, wobei die mindestens eine verfügbare Rechenressource in mindestens eine verfügbare Ressourcengruppe überführt ist und wobei das Zuweisen der Zielanzahl an Rechenressourcen für die erste Anforderung, einschließlich mindestens einer verfügbaren Rechenressource aus der Gruppe an Rechenressourcen, umfasst:
Bestimmen, ob eine verfügbare passende Ressourcengruppe mit der Zielanzahl an Rechenressourcen in der mindestens einen verfügbaren Ressourcengruppe vorhanden ist;
als Reaktion darauf, dass die passende verfügbare Ressourcengruppe in der mindestens einen verfügbaren Ressourcengruppe vorhanden ist, Zurückgewinnen einer Rechenressource, die in der passenden verfügbaren Ressourcengruppe zugewiesen wurde; und
Zuweisen von Rechenressourcen aus der passenden verfügbaren Ressourcengruppe für die erste Anforderung.

6. Verfahren nach Anspruch 5, wobei Zuweisen der Zielanzahl an Rechenressourcen für die erste Anforderung, einschließlich mindestens einer verfügbaren Rechenressource aus der Gruppe an Rechenressourcen, umfasst:
als Reaktion darauf, dass die verfügbare passende Ressourcengruppe in der mindestens einen verfügbaren Ressourcengruppe fehlt, Bestimmen, ob eine verfügbare redundante Ressourcengruppe in der mindestens einen verfügbaren Ressourcengruppe vorhanden ist, wobei eine Anzahl von Ressourcen in der verfügbaren redundanten Ressourcengruppe größer ist als die Zielanzahl; und
als Reaktion auf das Bestimmen, dass die verfügbare redundante Ressourcengruppe in der mindestens einen verfügbaren Ressourcengruppe vorhanden ist, Zuweisen der Zielanzahl an Rechenressourcen für die erste Anforderung durch Aufteilen der verfügbaren redundanten Ressourcengruppe.

7. Verfahren nach Anspruch 1, das ferner umfasst:
Bestimmen einer ersten Anzahl von Rechenressourcen in einer Ressourcengruppe, die ein der ersten Anforderung zugeordneter erster Mandant genutzt hat; und
als Reaktion auf das Bestimmen, dass eine Summe aus der Zielanzahl und der ersten Anzahl eine Obergrenze einer dem ersten Mandanten entsprechenden Anzahl von Rechenressourcen überschreitet, Festlegen einer Priorität der ersten Anforderung auf einen Wert unterhalb eines Prioritätsschwellenwerts.

8. Verfahren nach Anspruch 7, wobei die Obergrenze der Anzahl der Rechenressourcen, die dem ersten Mandanten zugeordnet sind, gleich einer Summe aus einer zweiten Anzahl von Rechenressourcen, die dem ersten Mandanten vorab zugewiesen wurden, und einer dritten Anzahl von Rechenressourcen ist, die durch einen Austausch mit einem zweiten Mandanten erhalten wurden.

9. Vorrichtung, mit:
einer Verarbeitungseinheit; und
einem mit der Verarbeitungseinheit gekoppelten Speicher, der darauf gespeicherte Befehle enthält, die, wenn sie von der Verarbeitungseinheit ausgeführt werden, die Vorrichtung veranlassen zum Ausführen von Aktionen mit:
Empfangen einer ersten Anforderung zur Nutzung einer Zielanzahl an Rechenressourcen in einer Gruppe von Rechenressourcen, wobei mindestens eine freie Rechenressource der Gruppe von Rechenressourcen in mindestens einer freien Ressourcengruppe organisiert ist;
Bestimmen, ob eine freie, passende Ressourcengruppe mit der Zielanzahl an Rechenressourcen in der mindestens einen freien Ressourcengruppe vorhanden ist;
als Reaktion darauf, dass die freie, passende Ressourcengruppe in der mindestens einen freien Ressourcengruppe fehlt, Bestimmen, ob eine freie, redundante Ressourcengruppe in der mindestens einen freien Ressourcengruppe vorhanden ist, wobei die Anzahl der Ressourcen in der freien, redundanten Ressourcengruppe größer ist als die Zielanzahl; und
als Reaktion darauf, dass die freie redundante Ressourcengruppe in der mindestens einen freien Ressourcengruppe vorhanden ist, Zuweisen der Zielanzahl an Rechenressourcen für die erste Anforderung durch Aufteilen der freien redundanten Ressourcengruppe, wobei das Zuweisen Aufteilen der freien redundanten Ressourcengruppe in eine erste Ressourcengruppe und mindestens eine zweite Ressourcengruppe umfasst, wobei die erste Ressourcengruppe die Zielanzahl an Rechenressourcen enthält; und
Zuweisen von Rechenressourcen aus der ersten Ressourcengruppe für die erste Anforderung; und
als Reaktion auf das Bestimmen, dass die freie redundante Ressourcengruppe in der mindestens einen freien Ressourcengruppe fehlt, Bestimmen, ob eine Priorität der ersten Anforderung einen Prioritätsschwellenwert überschreitet; und
als Reaktion darauf, dass die Priorität den Prioritätsschwellenwert überschreitet, Zuweisen der Zielanzahl an Rechenressourcen für die erste Anforderung, einschließlich mindestens einer verfügbaren Rechenressource aus der Gruppe der Rechenressourcen, wobei die verfügbare Rechenressource eine freie Rechenressource und eine Kandidaten- Rechenressource umfasst, die einer zweiten Anforderung mit einer Priorität zugewiesen wurde, die kleiner oder gleich dem Prioritätsschwellenwert ist.

10. Vorrichtung nach Anspruch 9, wobei die Aktionen ferner umfassen:
Überführen der mindestens einen freien Rechenressource in die mindestens eine freie Ressourcengruppe auf der Grundlage einer mehrstufigen Topologie, die der Gruppe an Rechenressourcen entspricht, derart, dass jede freie Ressourcengruppe Rechenressourcen umfasst, die einem gleichen Knoten in der mehrstufigen Topologie zugeordnet sind, wobei ein Knoten in der mehrstufigen Topologie einer der Gruppe an Rechenressourcen oder einer Verbindungskomponente für mehrere Rechenressourcen in der Gruppe an Rechenressourcen entspricht.

11. Vorrichtung nach Anspruch 10, wobei die Rechenressource eine Grafikverarbeitungseinheit aufweist und die mehrstufige Topologie mindestens zwei der folgenden umfasst:
eine erste Ebene, die einen Knoten umfasst, der einer einzelnen Grafikverarbeitungseinheit entspricht;
eine zweite Ebene, die einen Knoten umfasst, der einem PCle-Switch zum Verbinden einer Vielzahl von Grafikprozessoren entspricht;
eine dritte Ebene, die einen Knoten umfasst, der einem CPU-Sockel zum Verbinden einer Vielzahl von PCle-Switches entspricht; und
eine vierte Ebene, die einen Knoten umfasst, der einer Rechenvorrichtung zum Verbinden einer Vielzahl von CPU-Sockeln entspricht.

12. Computerprogrammprodukt, das materiell auf einem Computerspeichermedium gespeichert ist und maschinenausführbare Befehle umfasst, die, wenn sie von einer Vorrichtung ausgeführt werden, bewirken, dass die Vorrichtung:
bestimmt, ob eine freie, passende Ressourcengruppe mit der Zielanzahl an Rechenressourcen in der mindestens einen freien Ressourcengruppe vorhanden ist;
als Reaktion darauf, dass die freie passende Ressourcengruppe in der mindestens einen freien Ressourcengruppe fehlt, bestimmt, ob eine freie redundante Ressourcengruppe in der mindestens einen freien Ressourcengruppe vorhanden ist, wobei eine Anzahl von Ressourcen in der freien redundanten Ressourcengruppe größer ist als die Zielanzahl; und
als Reaktion darauf, dass die freie redundante Ressourcengruppe in der mindestens einen freien Ressourcengruppe vorhanden ist, die Zielanzahl an Rechenressourcen für die erste Anforderung zuweist, indem die freie redundante Ressourcengruppe aufgeteilt wird, wobei das Zuweisen Aufteilen der freien redundanten Ressourcengruppe in eine erste Ressourcengruppe und mindestens eine zweite Ressourcengruppe umfasst, wobei die erste Ressourcengruppe die Zielanzahl an Rechenressourcen enthält; und
Rechenressourcen aus der ersten Ressourcengruppe für die erste Anforderung zuweist; und
als Reaktion auf das Bestimmen, dass die freie redundante Ressourcengruppe in der mindestens einen freien Ressourcengruppe fehlt, bestimmt, ob eine Priorität der ersten Anforderung einen Prioritätsschwellenwert überschreitet; und
als Reaktion darauf, dass die Priorität den Prioritätsschwellenwert überschreitet, die Zielanzahl an Rechenressourcen für die erste Anforderung, einschließlich mindestens einer verfügbaren Rechenressource aus der Gruppe an Rechenressourcen, zuweist, wobei die verfügbare Rechenressource eine freie Rechenressource und eine Kandidaten- Rechenressource umfasst, die einer zweiten Anforderung mit einer Priorität zugewiesen wurde, die kleiner oder gleich dem Prioritätsschwellenwert ist.

## Revendications

1. Procédé implémenté par ordinateur pour gérer des ressources informatiques, comportant les étapes consistant à :
recevoir une première requête pour utiliser un nombre cible de ressources informatiques dans un ensemble de ressources informatiques, au moins une ressource informatique libre de l'ensemble de ressources informatiques étant organisée en au moins un groupe de ressources libres ;
déterminer si un groupe de ressources jumelées libres avec le nombre cible de ressources informatiques est présent dans ledit au moins un groupe de ressources libres ;
en réponse à l'absence du groupe de ressources jumelées libres dudit au moins un groupe de ressources libres, déterminer si un groupe de ressources redondantes libres est présent dans ledit au moins un groupe de ressources libres, un nombre de ressources dans le groupe de ressources redondantes libres étant supérieur au nombre cible ; et
en réponse à la présence du groupe de ressources redondantes libres dans ledit au moins un groupe de ressources libres, attribuer le nombre cible de ressources informatiques pour la première requête en divisant le groupe de ressources redondantes libres, ladite attribution comprenant la division du groupe de ressources redondantes libres en un premier groupe de ressources et au moins un second groupe de ressources, le premier groupe de ressources comportant le nombre cible de ressources informatiques ; et
attribuer des ressources informatiques du premier groupe de ressources pour la première requête ; et
en réponse à la détermination que le groupe de ressources redondantes libres est absent dudit au moins un groupe de ressources libres, déterminer si une priorité de la première requête dépasse un seuil de priorité ; et
en réponse au fait que la priorité dépasse le seuil de priorité, attribuer, pour la première requête, le nombre cible de ressources informatiques comportant au moins une ressource informatique disponible parmi l'ensemble de ressources informatiques, la ressource informatique disponible comportant une ressource informatique libre et une ressource informatique candidate attribuée à une seconde requête avec une priorité inférieure ou égale au seuil de priorité.

2. Procédé selon la revendication 1, comprenant en outre :
l'organisation de ladite au moins une ressource informatique libre en ledit au moins un groupe de ressources libres sur la base d'une topologie multi-niveaux correspondant à l'ensemble de ressources informatiques, de sorte que chaque groupe de ressources libres comporte des ressources informatiques associées à un même nœud dans la topologie multi-niveaux, un nœud dans la topologie multi-niveaux correspondant à l'une de l'ensemble de ressources informatiques ou à un composant de connexion pour de multiples ressources informatiques dans l'ensemble de ressources informatiques.

3. Procédé selon la revendication 2, dans lequel la ressource informatique comprend une unité de traitement graphique, et la topologie multi-niveaux comprend au moins deux niveaux parmi :
un premier niveau, comprenant un nœud correspondant à une unité de traitement graphique individuelle ;
un deuxième niveau, comprenant un nœud correspondant à un commutateur PCle pour connecter une pluralité d'unités de traitement graphique ;
un troisième niveau, comprenant un nœud correspondant à une prise de CPU pour connecter une pluralité de commutateurs PCle ; et
un quatrième niveau, comprenant un nœud correspondant à un dispositif informatique pour connecter une pluralité de prises de CPU.

4. Procédé selon la revendication 1, comprenant en outre :
en réponse à l'achèvement de la première requête, le marquage du premier groupe de ressources comme étant libre ; et
en réponse à la détermination que toutes les ressources informatiques dudit au moins un second groupe de ressources sont libres, fusionner le premier groupe de ressources et ledit au moins un second groupe de ressources en un nouveau groupe de ressources libres.

5. Procédé selon la revendication 1, dans lequel ladite au moins une ressource informatique disponible est organisée en au moins un groupe de ressources disponibles, et dans lequel l'attribution pour la première requête du nombre cible de ressources informatiques comportant au moins une ressource informatique disponible parmi l'ensemble des ressources informatiques :
la détermination si un groupe de ressources jumelées disponibles avec la nombre cible de ressources informatiques est présent dans ledit au moins un groupe de ressources disponibles ;
en réponse à la présence du groupe de ressources jumelées disponibles dans ledit au moins un groupe de ressources disponibles, la revendication d'une ressource informatique qui a été attribuée dans le groupe de ressources jumelées disponibles ; et
l'attribution de ressources informatiques du groupe de ressources jumelées disponibles pour la première requête.

6. Procédé selon la revendication 5, dans lequel l'attribution pour la première requête du nombre cible de ressources informatiques comportant au moins une ressource informatique disponible parmi l'ensemble de ressources informatiques :
en réponse à l'absence du groupe de ressources jumelées disponibles dans ledit au moins un groupe de ressources disponibles, la détermination si un groupe de ressources redondantes disponibles est présent dans ledit au moins un groupe de ressources disponibles, un nombre de ressources dans le groupe de ressources redondantes disponibles étant supérieur au nombre cible ; et
en réponse à la détermination que le groupe de ressources redondantes disponibles est présent dans ledit au moins un groupe de ressources disponibles, l'attribution du nombre cible de ressources informatiques pour la première requête en divisant le groupe de ressources redondantes disponibles.

7. Procédé selon la revendication 1, comprenant en outre :
la détermination d'un premier nombre de ressources informatiques dans un groupe de ressources qu'un premier locataire associé à la première requête a utilisé ; et
en réponse à la détermination qu'une somme du nombre cible et du premier nombre dépasse une limite supérieure d'un nombre de ressources informatiques correspondant au premier locataire, l'établissement d'une priorité de la première requête pour qu'elle soit inférieure à un seuil de priorité.

8. Procédé selon la revendication 7, dans lequel la limite supérieure du nombre de ressources informatiques correspondant au premier locataire est égale à la somme d'un deuxième nombre de ressources informatiques pré-attribuées pour le premier locataire et d'un troisième nombre de ressources informatiques obtenues par échange avec un second locataire.

9. Dispositif, comprenant :
une unité de traitement ; et
une mémoire couplée à l'unité de traitement et comprenant des instructions stockées sur celle-ci qui, lorsqu'elles sont exécutées par l'unité de traitement, amènent le dispositif à effectuer des actes consistant à :
recevoir une première requête pour utiliser un nombre cible de ressources informatiques dans un ensemble de ressources informatiques, au moins une ressource informatique libre de l'ensemble de ressources informatiques étant organisée en au moins un groupe de ressources libres ;
déterminer si un groupe de ressources jumelées libres avec le nombre cible de ressources informatiques est présent dans ledit au moins un groupe de ressources libres ;
en réponse à l'absence du groupe de ressources jumelées libres dudit au moins un groupe de ressources libres, déterminer si un groupe de ressources redondantes libres est présent dans ledit au moins un groupe de ressources libres, un nombre de ressources dans le groupe de ressources redondantes libres étant supérieur au nombre cible ; et
en réponse à la présence du groupe de ressources redondantes libres dans ledit au moins un groupe de ressources libres, attribuer le nombre cible de ressources informatiques pour la première requête en divisant le groupe de ressources redondantes libres, ladite attribution comprenant la division du groupe de ressources redondantes libres en un premier groupe de ressources et au moins un second groupe de ressources, le premier groupe de ressources comportant le nombre cible de ressources informatiques ; et
attribuer des ressources informatiques du premier groupe de ressources pour la première requête ; et
en réponse à la détermination que le groupe de ressources redondantes libres est absent dudit au moins un groupe de ressources libres, déterminer si une priorité de la première requête dépasse un seuil de priorité ; et
en réponse au fait que la priorité dépasse le seuil de priorité, attribuer, pour la première requête, le nombre cible de ressources informatiques comportant au moins une ressource informatique disponible parmi l'ensemble de ressources informatiques, la ressource informatique disponible comportant une ressource informatique libre et une ressource informatique candidate attribuée à une seconde requête avec une priorité inférieure ou égale au seuil de priorité.

10. Dispositif selon la revendication 9, les actes comprenant en outre :
l'organisation de ladite au moins une ressource informatique libre en ledit au moins un groupe de ressources libres sur la base d'une topologie multi-niveaux correspondant à l'ensemble de ressources informatiques, de sorte que chaque groupe de ressources libres comporte des ressources informatiques associées à un même nœud dans la topologie multi-niveaux, un nœud dans la topologie multi-niveaux correspondant à l'une de l'ensemble de ressources informatiques ou à un composant de connexion pour de multiples ressources informatiques dans l'ensemble de ressources informatiques.

11. Dispositif selon la revendication 10, dans lequel la ressource informatique comprend une unité de traitement graphique, et la topologie multi-niveaux comprend au moins deux niveaux parmi :
un premier niveau, comprenant un nœud correspondant à une unité de traitement graphique individuelle ;
un deuxième niveau, comprenant un nœud correspondant à un commutateur PCle pour connecter une pluralité d'unités de traitement graphique ;
un troisième niveau, comprenant un nœud correspondant à une prise de CPU pour connecter une pluralité de commutateurs PCle ; et
un quatrième niveau, comprenant un nœud correspondant à un dispositif informatique pour connecter une pluralité de prises de CPU.

12. Produit de programme informatique qui est stocké de manière tangible dans un support de stockage informatique et comprenant des instructions exécutables par machine qui, lorsqu'elles sont exécutées par un dispositif, amènent le dispositif à :
déterminer si un groupe de ressources jumelées libres avec le nombre cible de ressources informatiques est présent dans ledit au moins un groupe de ressources libres ;
en réponse à l'absence du groupe de ressources jumelées libres dudit au moins un groupe de ressources libres, déterminer si un groupe de ressources redondantes libres est présent dans ledit au moins un groupe de ressources libres, un nombre de ressources dans le groupe de ressources redondantes libres étant supérieur au nombre cible ; et
en réponse à la présence du groupe de ressources redondantes libres dans ledit au moins un groupe de ressources libres, attribuer le nombre cible de ressources informatiques pour la première requête en divisant le groupe de ressources redondantes libres, ladite attribution comprenant la division du groupe de ressources redondantes libres en un premier groupe de ressources et au moins un second groupe de ressources, le premier groupe de ressources comportant le nombre cible de ressources informatiques ; et
attribuer des ressources informatiques du premier groupe de ressources pour la première requête ; et
en réponse à la détermination que le groupe de ressources redondantes libres est absent dudit au moins un groupe de ressources libres, déterminer si une priorité de la première requête dépasse un seuil de priorité ; et
en réponse au fait que la priorité dépasse le seuil de priorité, attribuer, pour la première requête, le nombre cible de ressources informatiques comportant au moins une ressource informatique disponible parmi l'ensemble de ressources informatiques, la ressource informatique disponible comportant une ressource informatique libre et une ressource informatique candidate attribuée à une seconde requête avec une priorité inférieure ou égale au seuil de priorité.
